# EUROPEAN PATENT SPECIFICATION

(11) **EP 1 708 914 B1**
(45) Date of publication and mention of the grant of the patent: **06.01.2010**
(21) Application number: 05701107.4
(22) Date of filing: 21.01.2005
(51) Int. Cl.: B61F 19/08, B60R 19/54, B61D 15/06

(54) **METHOD FOR PREVENTING A TRACK-BOUND VEHICLE FROM OVERRUNNING AN OBSTACLE AND TRACK-BOUND VEHICLE**
VERFAHREN ZUM VERHINDERN, DASS EIN SCHIENENGEFÜHRTES FAHRZEUG ÜBER EIN HINDERNIS HINWEGLÄUFT, UND SCHIENENGEBUNDENES FAHRZEUG
PROCEDE EMPECHANT UN VEHICULE SUR VOIE DE PASSER SUR UN OBSTACLE, ET VEHICULE SUR VOIE

(30) Priority: 26.01.2004 GB 0401612
(43) Date of publication of application: 11.10.2006
(73) Proprietor: Bombardier Transportation GmbH, 10785 Berlin (DE)
(72) Inventor: POISINGER, Josef, A-1210 Wien (AT); TASCH, Michael, A-1230 Wien (AT)
(74) Representative: Novagraaf IP
(86) International application number: PCT/EP2005/000591
(87) International publication number: WO 2005/070742

(56) References cited:
- DE-C- 124 940
- DE-U1- 20 002 278
- US-A- 5 410 484
- US-A- 5 748 477
- US-A1- 2001 035 657

## Description

The invention concerns a track-bound vehicle, such as for instance a light rail train, a tram, a trolley-bus, or a hybrid vehicle such as a tram-on-tires, shaped so that a gap exists between the track or, as the case may be, level road surface or more generally the ground and the lower front edge of the vehicle, comprising a device to close this gap. The invention also concerns the corresponding method.

The gap defined above carries the risk that persons or objects in front of the vehicle may be caught underneath the vehicle. To deal with this issue, it has been suggested in DE20002278U to provide the front end of the vehicle with a height-adjustable nose apron covering the gap. This apron is connected to the vehicle by at least one adjustment unit formed as an electro-mechanical positioning drive. The drive is automatically controlled by a controller to constantly adjust the position of the apron based on the actual vertical distance between the vehicle body and the rail level, measured by a sensor unit. Thanks to this permanent adjustment, the troughs and bumps on the track are compensated for. The resulting device however appears to be very complicated and expensive. The energy consumption of the drive unit is not insignificant and its service life will not be long, since it is continuously in service.

US 2001/0035657 discloses an other vehicle provide with an inflatable element which is deployed when the risk of a collision is detected.

There is a need for a simple way of at least partially closing the gap provided between the front end of a vehicle of the general type described above and the ground, so that persons or objects above a specific size are prevented from being caught underneath the vehicle.

According to a first aspect of the present invention, there is provided a method according to claim 1, for preventing a track-bound vehicle shaped so as to form a gap between the vehicle and the ground from overrunning an obstacle.

As a result of the real time assessment of emergency situations as defined in claim 1, the number of unnecessary actuations of the shield is greatly reduced.

The term "track-bound" vehicle as used herein is a reference to vehicles required to run on tracks, such as trains and trams, as well as vehicles able to run on both tracks and general road surfaces.

When actuated, the shield is placed between the lower front edge of the vehicle and the track or ground level and fixed in this position. The shield acts as a kind of rake blade, edging along possible obstacles in front of the vehicle or pushing them aside. Since actuation is required only at the time of emergency, the shield does not have to be provided with a complex control system. In normal operation, the gap is not covered. The shield can be held in a recessed position and be hidden, e.g. behind the front spoiler or under the vehicle.

Advantageously, the emergency condition is met if the difference between the distance between the obstacle and the vehicle on the one hand and the braking distance of the vehicle on the other hand is smaller than a predetermined value. In particular, if the predetermined value is zero, the emergency condition will be met if the distance between the obstacle and the vehicle is smaller than the braking distance of the vehicle. More generally, the predetermined value can be a constant value or a value which depends e.g. on the vehicle speed or on the braking distance of the vehicle.

According to the invention, the method comprises a step of detecting actuation of a driver's control member. This detection is used as one of the parameters on which the determination of the emergency condition is based. Different tests can be defined, e.g.:
- the condition is met if actuation of the driver's control member has been detected and the difference between the distance between the obstacle and the vehicle on the one hand and the braking distance of the vehicle on the other hand is smaller than a predetermined value; and/or
- the condition is met if actuation of the driver's control member has been detected or the difference between the distance between the obstacle and the vehicle on the one hand and the braking distance of the vehicle on the other hand is smaller than a predetermined value; or
- the condition is met if and only if actuation of the driver's control member has been detected while the difference between the distance between the obstacle and the vehicle on the one hand and the braking distance of the vehicle on the other hand is smaller than a predetermined value.

A sensor (such as a camera, a radar device or a microwave telemeter) can be used to detect any obstacles on the track.

Additionally, the extension of the shield can be triggered by other events that are likely to be representative of a situation in which the vehicle could overrun an obstacle. Actuation may first of all be carried out by the driver. For instance, a pushbutton on a driver's control panel can be used to initiate the extension.

Preferably, the method further comprises a step of generating an emergency output signal on a driver's control board of the vehicle when the distance between the obstacle and the vehicle is smaller than the braking distance of the vehicle. The extension of the shield can be triggered by mechanical or hydraulic means. Preferably however, the signals are electric, analogue or digital signals.

The step of detecting an emergency situation comprises a step of generating an electric signal representing the occurrence of a detected emergency situation. The step of extending the shield comprises a step of automatically initiating extension of the shield based on said electric signal.

Due to varying ground clearance, positioning of the shield is designed to allow coverage of every possible height of the gap, whereby the lower edge of the shield may reach ground level. In order to ensure the smallest possible clearance of the lower edge of the actuated shield from the ground, the shield may be pushed against the ground by applying additional force such as an elastic force.

The lower edge of the shield can be provided with spring-loaded skids, reels, wheels or similar components to roll or slide on the ground. The lower edge of the shield may be executed as a replaceable abrasion edge. Alternatively, a small, predetermined clearance can be maintained between the shield and the ground.

Positioning the shield can be effected using a sliding, rotating or tipping motion. The actuated shield may be lowered using gravitational acceleration, or accelerated by applying additional power. The additional power can be provided by a motor such as an electromechanical actuator or by releasing energy previously stored in an energy accumulator.

Preferably, the method further comprises a step of maintaining the shield in the retracted position as long as no emergency situation is detected. The step of extending the shield comprises a step of releasing a lock that maintains the shield in the retracted position. The lock can cooperate directly with the shield, or indirectly with the actuating means providing additional power.

Advantageously, the procedure further comprises a step of automatically decelerating the vehicle when actuation of the driver's control member has been detected.

According to a second aspect of the invention, there is provided a track-bound vehicle according to claim 9, shaped so as to form a gap between the vehicle and the ground.

The shield may be in one or in several parts, for instance providing grooves for coupling devices. The shield may be executed as a solid panel, a grate-like frame or an assembly of bars. In addition, part of the vehicle front itself (for instance the spoiler) may be used as a shield and lowered accordingly. The shield can also consist of one or more inflatable cushions.

The signals generated can be analogue or digital electric signals.

According to the invention, the manually operated control member is connected to a braking system of the vehicle and initiates an emergency braking command.

The distance sensor can be any suitable proximity sensor, a camera, a radar device, a microwave telemeter, etc. The sensor can be fixedly mounted to the front or the roof of the vehicle. Alternatively, a drive system can be provided for moving the distance sensor in such a way that the distance sensor follows the track. The position of the distance sensor can be controlled so as to compensate for the movements of the car body and the curves of the track. The relative movement between the vehicle body and the running gear can be used as an input variable for pivoting the sensor. If a camera is used in connection with image recognition processing, the curve of the track can be directly recognised by the image processor and a signal can be generated to allow the camera to follow its target, i.e. the track or road.

The braking distance is preferably assessed based on the speed of the vehicle, measured by a vehicle speed sensor. Advantageously, the inertia of the vehicle can also be assessed, so that the assessed braking distance is longer when, for a given vehicle speed, the assessed inertia of the vehicle is greater. Various means can be used to assess the inertia of the vehicle. For instance, force or distance measurements can be carried out on the secondary suspension of the vehicle. Alternatively, the history of acceleration and deceleration of the vehicle can be used.

Advantageously, the means for extending the shield comprise lock means for maintaining the shield in the retracted position and for releasing the shield in response to the emergency signal. The shield is secured in the retracted position to avoid any unwanted extension. Preferably, the locking means will also be used to reset the shield in the retracted position after it has been extended.

The shield can be extended by gravity. However, to ensure quicker and more reliable operation, it may be preferable to provide the means for extending the shield with drive means for moving the shield from the retracted position towards the extended position. The drive means may comprise a motor such as an electromechanical actuator. However, a system comprising an energy accumulator which stores potential energy in a loaded state and releases kinetic energy when unloading to move the shield from the retracted position towards the extended position is preferred, since an energy accumulator seems to be the most efficient way of providing a non-repeated motion requiring quick acceleration, i.e. power. The energy accumulator can be of any suitable type. Energy can be stored as a pressurized fluid or an explosive chemical compound. This may be particularly relevant if the shield comprises an inflatable cushion.

However, energy accumulators that can be easily reloaded, such as springs, will be preferred. Advantageously, the energy accumulator applies to the shield in the extended position a force opposed to the retraction of the shield. The shield is provided with a follower cooperating with the ground in the extended position. Spring-loaded skids, reels, wheels or similar components, located at the lower edge of the shield so as to roll or slide on the ground can be used as followers. Depending on the type of track or road, the follower may be adapted to cooperate with different parts of the ground, e.g. the rail, or the track itself. Preferably, the drive means are such that the energy accumulator is reloaded by the reset movement of the shield from the extended position back to the retracted position.

Other advantages and features of the invention will become more clearly apparent from the following description of specific embodiments of the invention given as non-restrictive examples only and represented in the accompanying drawings in which:
- figure 1A is a side view of the front part of a track-bound vehicle with a retracted shield, before an obstacle has been detected;
- figure 1B is a schematic view of the control system for controlling the shield;
- figure 2A is a side view of the front part of the vehicle on a planar track with an extended shield;
- figure 2B is a schematic view of the control system with the shield in the extended position;
- figure 3 is a flow diagram of a method for preventing the track-bound vehicle of figure 1 from overrunning an obstacle; and
- figure 4 is a flow diagram of an alternative method for preventing the track-bound vehicle of figure 1 from overrunning an obstacle.

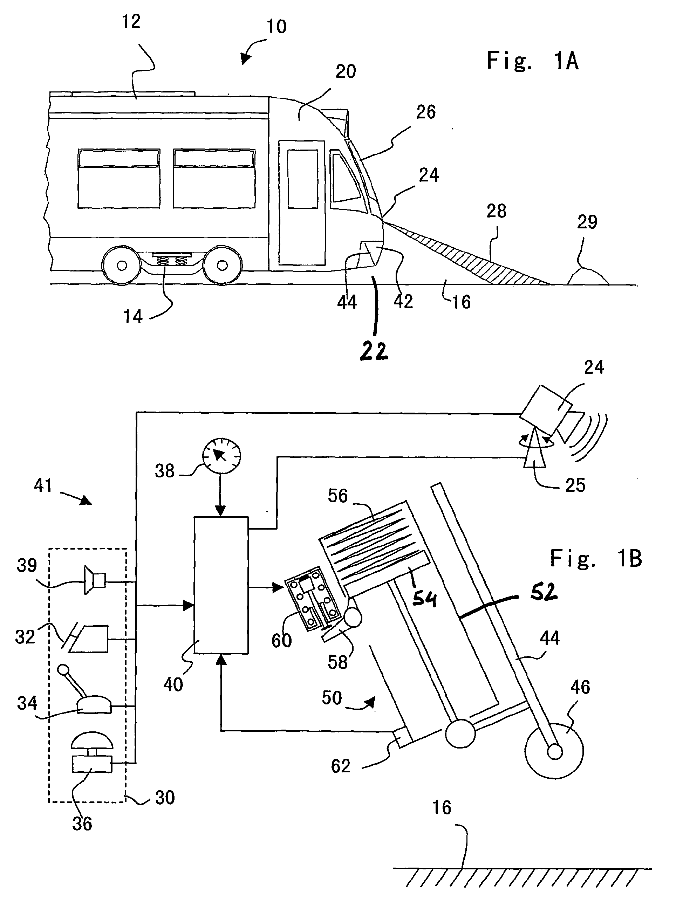

With reference to figure 1, a track-bound vehicle 10, such as a light rail vehicle, a tram, a trolley bus or a hybrid vehicle such as a tram-on-tires is provided with a car body 12 supported on a running gear 14, which follows a track on the ground 16. The track can be a railroad or a track defined by visual or electromagnetic guiding landmarks or markers.

The front part 20 of the car body forms a driver's cab. A gap 22 is provided between the lower edge of the driver's cab and the ground. This gap 22 is necessary for travelling on an uneven track because of the overhanging position of the front part 20 of the vehicle in relation to the running gear 14. By way of example, the dimension of the gap can be of a maximum height of between 220 mm and 280 mm while the vehicle runs on a level or flat track, or between 60 mm and 350 mm approximately when the vehicle is driven through troughs and over bumps in the track system.

A camera 24 is mounted on a drive unit 25 fixed to the front end of the vehicle, under the windscreen 26 of the driver's cab 20. The camera field 28 is directed towards the track ahead of the vehicle. In figure 1A, an obstacle 29 has been represented in front of the vehicle, ahead of the field 28. The drive unit 25 allows the camera to pivot so as to follow the track through curves.

As shown in figure 1B, the control panel 30 of the driver's cab is also provided with a series of control members, including for example a brake pedal 32, a control lever 34 and an emergency pushbutton 36. The vehicle is also provided with a vehicle speed sensor 38. These instruments are electrically connected to an electronic control unit 40 to form a signal generator 41. The control unit is also connected to a visual and/or audio indicator 39 on the control panel 30.

The control unit 30 is also connected to the drive unit 25 so as to control the position of the camera 24. The control unit comprises a sub-unit for processing the images of the camera in real time so that the curves of the track in front of the vehicle can be recognised. The control unit 30 uses this information to control the drive unit 25 so that the camera follows the track and compensates for the movements of the front end of the vehicle with respect to the track.

The lower edge of the front end of the vehicle body is provided with a recess 42 shown in figure 1A, for receiving a shield 44. The shield 44 is movable between a fully retracted position and an extended position. As schematically shown in figure 1B, the shield 44 is provided with rollers 46 at its lower edge and powered by an energy accumulator 50, comprising a cylinder 52, a piston 54 guided in the cylinder 52 and a loaded spring 56. The piston 54 is locked by a latch 58, which is controlled by an electromechanical actuator 60 connected to the control unit 40. A position sensor 62 detects the position of the shield 44.

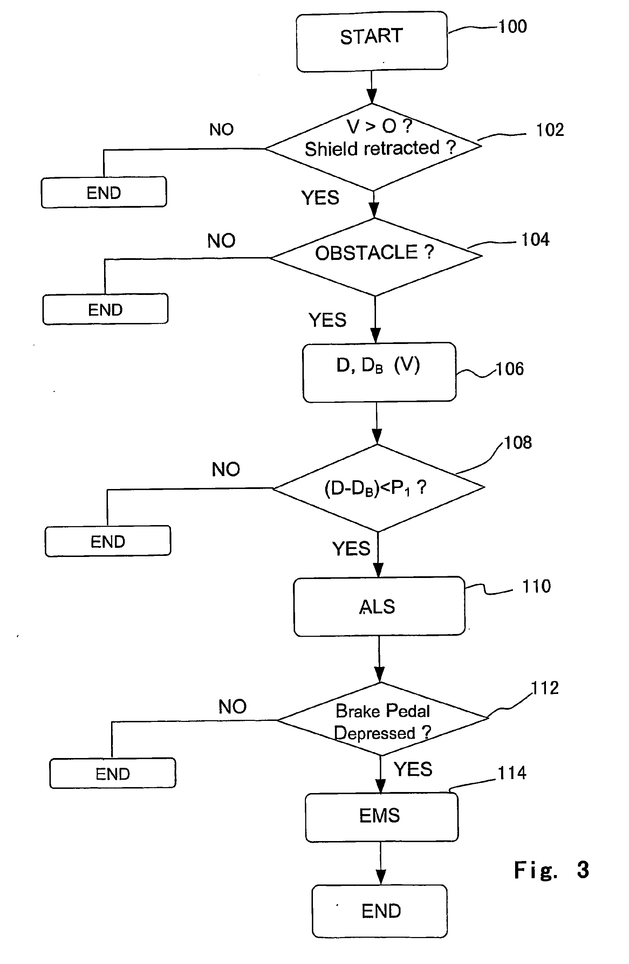

The procedure for preventing people or objects from being caught under the train will now be discussed with reference to figure 3.

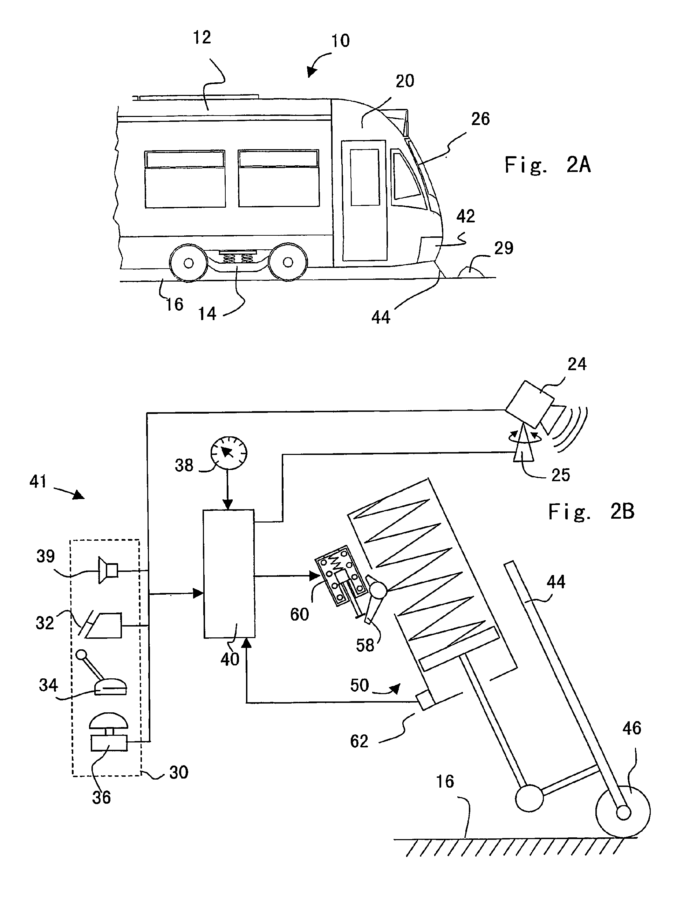

The routine starts at step 100. In decision block 102, the control unit 40 determines whether the vehicle speed, measured by the speed sensor 38, is higher than zero and determines from the signal of sensor 62 whether the shield is in the retracted position. If this is case, the routine proceeds to step 104 where the camera 24 detects the presence of obstacles. If an obstacle is detected, the routine proceeds to step 106 where the distance D to the obstacle is assessed using image recognition. The braking distance D_{B} of the vehicle for the measured vehicle speed V is calculated and compared to the distance to the obstacle. Then the routine proceeds to step 108 to compare the braking distance D_{B} to the distance D. If the difference between the distance D to the obstacle and braking distance D_{B} is less than a predetermined value P₁, the routine proceeds to step 110, where an alarm signal ALS is sent by the control unit 40 to the driver via the indicator 39. Then the routine proceeds to step 112 to determine the state of the actuators 32 and 34. If the driver has actuated one of the actuators 32 or 34, the routine proceeds to step 114 and the control unit 40 sends an emergency signal EMS to the electromechanical actuator 60, which pivots the latch 58 so as to unlock the piston 54, as shown in figure 2B. The piston 54 is pushed by the spring 56 and moves the shield 44 towards the extended position, until the rollers 46 abut on the ground 16. In the extended position, the spring 56 is not completely unloaded and applies pressure on the piston 54 to prevent retraction of the shield.

The control unit 40 can also detect other events such as depressing a special pushbutton 36, which allows the driver to extend the shield without the necessity of other signals being present.

Once the shield has been extended the procedure ends. The shield can be retracted manually by the driver or via driving means. The routine is repeated continuously (e.g. every second) as part of the control procedures of the vehicle.

This procedure ensures that the shield is extended only when actuation of a driver's control member has been detected and the distance between the obstacle and the vehicle is smaller than the braking distance of the vehicle. This avoids unnecessary actuations of the shield and gives the driver useful assistance in emergency situations.

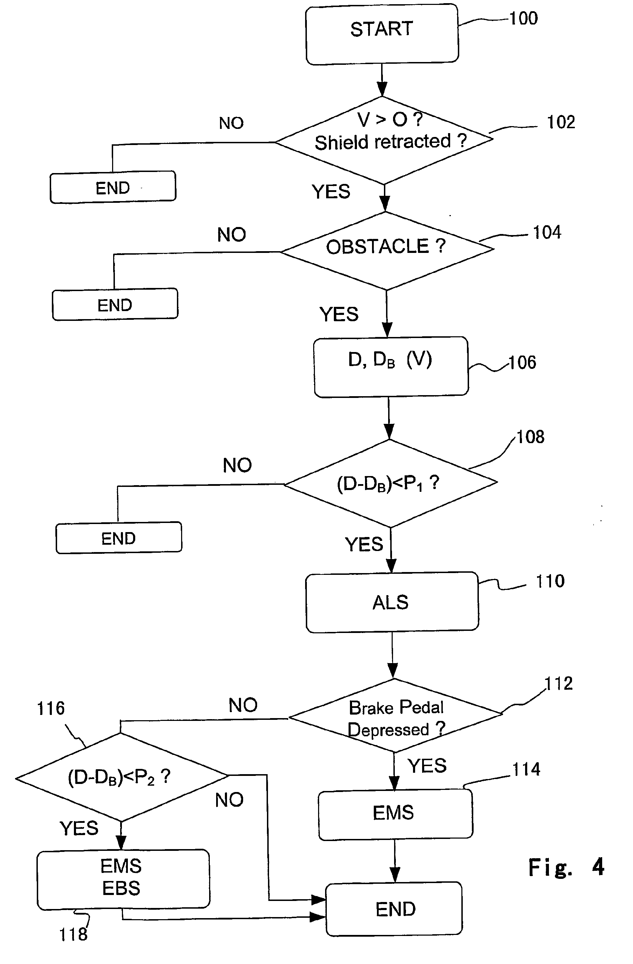

An alternative procedure for preventing people or objects from being caught under the train will now be discussed with reference to figure 4. The procedure of figure 4 differs from the procedure of figure 3 merely in that it comprises a step of automatically decelerating the vehicle (10) when said emergency condition is met. More specifically, if at step 112 the driver has not actuated one of the actuators 32 or 34, the routine proceeds to step 116 to compare the difference D-D_{B} to a second predetermined value P₂ which is less than P₁. If this is the case, then an emergency braking signal EBS is emitted to directly control the braking system of the vehicle and the emergency signal EMS is simultaneously sent to the electromechanical actuator 60 to extend the shield. P₁ can be a fixed value, superior or equal to zero or a value determined based on external parameters such as the vehicle speed. P₂ can be a fixed value, above, equal to or below zero, or a value determined based on external parameters such as the vehicle speed.

However, it should be clear that this additional step requires that the presence sensor 24 for detecting the presence of an obstacle be very reliable, so that no undesired emergency braking occurs. Otherwise, it is preferable to use the method of figure 3, which ensures that the driver keeps full control of the vehicle braking.

While a preferred embodiment of the invention has been described, it is to be understood by those skilled in the art that the invention is naturally not limited to these embodiments. Many variations are possible:

The control lever 34 can be mechanically connected to the latch 58.

The energy accumulator 50 has been described in a very schematic way. Appropriate mechanisms for storing the potential energy and releasing it can be found for instance in the field of power circuit breakers. Several latches can be used in series to limit the power of the electromechanical actuator 60. It is also possible to use gravity to extend the shield.

An electric motor or a pneumatic or hydraulic cylinder can be used instead of the energy accumulator. Other types of energy accumulators are also possible.

Drive means can be provided to raise the shield back to the retracted position.

The camera 24 can be mounted at any suitable location allowing the camera field 28 to cover the track ahead of the vehicle. The camera can be fixed so that the drive unit 25 is optional.

Instead of extending the shield down to the ground level, it is also possible to extend the shield to an extended position above ground level, whereby the extended position is controlled as a function of a distance measured between a part of the vehicle and the ground and/or a distance measured between the shield and the ground.

The procedure of figure 3 is only one example of a method for controlling the shield. Alternative procedures can be carried out. The steps of the procedure can be permuted. For instance, the routine can start with step 112. Several steps of the procedure can also be processed in parallel, for instance all steps where the input signals are processed.

According to another embodiment, the driver can choose between a first mode of operation including steps 116 to 118 and a second mode of operation excluding steps 116 to 118. According to yet another embodiment, only step 116 is omitted. According to yet another embodiment, the emergency signal EMS is generated before the routine proceeds to step 112.

## Claims

1. A method for preventing a track-bound vehicle (10) shaped so as to form a gap (22) between the vehicle (10) and the ground (16) from overrunning an obstacle, comprising the steps of:
- detecting an obstacle on the track in front of the vehicle (10),
- assessing the distance between the vehicle (10) and the obstacle;
- assessing the braking distance of the vehicle (10);
- determining an emergency condition based on parameters comprising at least the distance between the vehicle and the obstacle and the braking distance of the vehicle;
**characterized in that** it also comprises the step of:
- generating an emergency signal when the emergency condition is met;
- generating an emergency braking command when a driver's control member (34) connected to a braking system of the vehicle is actuated;
- extending a shield (44) from a retracted position towards an extended position to at least partially close the gap (22) in response to said emergency signal and to said emergency braking command.

2. The method of claim 1, wherein the emergency condition is met if the difference between the distance between the obstacle and the vehicle (10) on the one hand and the braking distance of the vehicle on the other hand is smaller than a predetermined value.

3. The method of claim 1 or 2, wherein the emergency condition is met if and only if actuation of the driver's control member has been detected while the difference between the distance between the obstacle and the vehicle (10) on the one hand and the braking distance of the vehicle on the other hand is smaller than a predetermined value.

4. The method of any of the preceding claims, further comprising a step of generating an alarm signal on a driver's control board of the vehicle when the difference between the distance between the obstacle and the vehicle (10) on the one hand and the braking distance of the vehicle on the other hand is smaller than a predetermined value.

5. The method of any of the preceding claims, wherein the step of assessing the braking distance of the vehicle comprises measuring the vehicle speed.

6. The method of any of the preceding claims, wherein the step of assessing the braking distance of the vehicle comprises determining the mass of the vehicle.

7. The method of any one of the preceding claims, further comprising a step of automatically decelerating the vehicle (10) when actuation of the driver's control member has been detected.

8. The method of any one of the preceding claims, further comprising a step of automatically decelerating the vehicle (10) when said emergency condition is met.

9. A track-bound vehicle (10) shaped so as to form a gap (22) between the vehicle and the ground and comprising:
- a shield (44) movable from a retracted position towards an extended position to at least partially close the gap (22);
- means for extending the shield from the retracted position towards the extended position in response to an emergency signal; and
- an emergency signal-generating means for generating the emergency signal when an emergency condition is met,
**characterized in that** it further comprises:
- a distance sensor for generating a distance signal representative of the distance between the vehicle (10) and an obstacle on a track in front of the vehicle;
- a braking distance assessment means for generating a braking distance signal, said emergency condition being determined based on at least the distance signal and the braking distance signal;
- a driver's control member connected to a braking system of the vehicle, initiating an emergency braking command,
wherein the emergency condition is determined based on at least the distance signal, the braking distance signal and the emergency braking command.

10. The track-bound vehicle of claim 9, wherein the condition is met if an emergency braking command has been initiated while the difference between the distance between the obstacle and the vehicle (10) on the one hand and the braking distance of the vehicle on the other hand is smaller than a predetermined value.

11. The track-bound vehicle of claim 9, wherein the condition is met if and only if an emergency braking command has been initiated while the difference between the distance between the obstacle and the vehicle (10) on the one hand and the braking distance of the vehicle on the other hand is smaller than a predetermined value.

12. The track-bound vehicle of any one of claims 9 to 11, further comprising a drive system for moving the distance sensor (24) in such a way that the distance sensor follows the track.

13. The track-bound vehicle of any one of claims 9 to 13, wherein the means for extending the shield comprises a drive system (50) for moving the shield from the retracted position toward the extended position.

## Patentansprüche

1. Verfahren zum Verhindern, dass ein schienengeführtes Fahrzeug (10), das so gestaltet ist, dass zwischen dem Fahrzeug (10) und dem Boden (16) ein Spalt (22) gebildet wird, ein Hindernis überrollt, umfassend die folgenden Schritte:
- Erkennen eines Hindernisses auf dem Gleis vor dem Fahrzeug (10),
- Veranschlagen des Abstands zwischen dem Fahrzeug (10) und dem Hindernis,
- Veranschlagen des Bremswegs des Fahrzeugs (10),
- Ermitteln einer Notfallbedingung auf der Basis von Parametern, die wenigstens den Abstand zwischen dem Fahrzeug und dem Hindernis und den Bremsweg des Fahrzeugs umfassen,
**dadurch gekennzeichnet, dass** es auch die folgenden Schritte umfasst:
- Erzeugen eines Notsignals, wenn die Notfallbedingung erfüllt ist,
- Erzeugen eines Notbremsbefehls, wenn ein mit der Bremsanlage des Fahrzeugs verbundenes Fahrzeugführer-Bedienelement (34) betätigt wird,
- Ausfahren eines Schilds (44) als Reaktion auf das Notsignal und den Notbremsbefehl aus einer eingezogenen Position in eine ausgefahrene Position, um den Spalt (22) wenigstens teilweise zu schließen.

2. Verfahren nach Anspruch 1, bei dem die Notfallbedingung erfüllt ist, wenn die Differenz zwischen dem Abstand zwischen dem Hindernis und dem Fahrzeug (10) einerseits und dem Bremsweg des Fahrzeugs andererseits kleiner als ein vorbestimmter Wert ist.

3. Verfahren nach Anspruch 1 oder 2, bei dem die Notfallbedingung ausschließlich dann erfüllt ist, wenn die Betätigung des Fahrzeugführer-Bedienelements detektiert wurde, während die Differenz zwischen dem Abstand zwischen dem Hindernis und dem Fahrzeug (10) einerseits und dem Bremsweg des Fahrzeugs andererseits kleiner als ein vorbestimmter Wert ist.

4. Verfahren nach einem der vorhergehenden Ansprüche, ferner umfassend einen Schritt des Erzeugens eines Warnsignals auf einem Führerstand-Bedienfeld des Fahrzeugs, wenn die Differenz zwischen dem Abstand zwischen dem Hindernis und dem Fahrzeug (10) einerseits und dem Bremsweg des Fahrzeugs andererseits kleiner als ein vorbestimmter Wert ist.

5. Verfahren nach einem der vorhergehenden Ansprüche, bei dem der Schritt des Veranschlagens des Bremswegs des Fahrzeugs das Messen der Fahrzeuggeschwindigkeit umfasst.

6. Verfahren nach einem der vorhergehenden Ansprüche, bei dem der Schritt des Veranschlagens des Bremswegs des Fahrzeugs das Ermitteln der Masse des Fahrzeugs umfasst.

7. Verfahren nach einem der vorhergehenden Ansprüche, ferner umfassend einen Schritt des automatischen Verlangsamens des Fahrzeugs (10), wenn die Betätigung des Fahrzeugführer-Bedienelements detektiert wurde.

8. Verfahren nach einem der vorhergehenden Ansprüche, ferner umfassend einen Schritt des automatischen Verlangsamens des Fahrzeugs (10), wenn die genannte Notfallbedingung erfüllt ist.

9. Schienengeführtes Fahrzeug (10), das so gestaltet ist, dass zwischen dem Fahrzeug und dem Boden ein Spalt (22) gebildet wird, und Folgendes umfasst:
- einen Schild (44), der aus einer eingezogenen Position in eine ausgefahrene Position bewegt werden kann, um den Spalt (22) zumindest teilweise zu schließen,
- Mittel zum Ausfahren des Schilds als Reaktion auf ein Notsignal aus der eingezogenen Position in die ausgefahrene Position und
- ein Notsignal-erzeugendes Mittel zum Erzeugen des Notsignals, wenn eine Notfallbedingung erfüllt wird,
**dadurch gekennzeichnet, dass** es ferner Folgendes umfasst:
- einen Abstandssensor zum Erzeugen eines für den Abstand zwischen dem Fahrzeug (10) und einem Hindernis auf einem Gleis vor dem Fahrzeug repräsentativen Abstandssignals,
- ein Bremswegveranschlagungsmittel zum Erzeugen eines Bremswegsignals, wobei die Notfallbedingung auf der Basis von wenigstens dem Abstandssignal und dem Bremswegsignal ermittelt wird,
- ein mit einer Bremsanlage des Fahrzeugs verbundenes Fahrzeugführer-Bedienelement, das einen Notbremsbefehl ausgibt,
wobei die Notfallbedingurig auf der Basis von wenigstens dem Abstandssignal, dem Bremswegsignal und dem Notbremsbefehl ermittelt wird.

10. Schienengeführtes Fahrzeug nach Anspruch 9, bei dem die Bedingung erfüllt ist, wenn ein Notbremsbefehl eingeleitet wurde, während die Differenz zwischen dem Abstand zwischen dem Hindernis und dem Fahrzeug (10) einerseits und dem Bremsweg des Fahrzeugs andererseits kleiner als ein vorbestimmter Wert ist.

11. Schienengeführtes Fahrzeug nach Anspruch 9, bei dem die Bedingung ausschließlich dann erfüllt ist, wenn ein Notbremsbefehl eingeleitet wurde, während die Differenz zwischen dem Abstand zwischen dem Hindernis und dem Fahrzeug (10) einerseits und dem Bremsweg des Fahrzeugs andererseits kleiner als ein vorbestimmter Wert ist.

12. Schienengeführtes Fahrzeug nach einem der Ansprüche 9 bis 11, ferner umfassend ein Antriebssystem zum derartigen Bewegen des Abstandssensors (24), dass der Abstandssensor dem Gleis folgt.

13. Schienengeführtes Fahrzeug nach einem der Ansprüche 9 bis 13, bei dem das Mittel zum Ausfahren des Schilds ein Antriebssystem (50) zum Bewegen des Schilds aus der eingezogenen Position in die ausgefahrene Position umfasst.

## Revendications

1. Procédé destiné à empêcher un véhicule sur voie (10) ayant une forme permettant de former un espace (22) entre le véhicule (10) et le sol (16) de rouler sur un obstacle comprenant les étapes consistant à :
- détecter un obstacle sur la voie devant le véhicule (10),
- déterminer la distance entre le véhicule (10) et l'obstacle ;
- déterminer la distance de freinage du véhicule (10) ;
- déterminer une situation d'urgence en se fondant sur les paramètres comprenant au moins la distance entre le véhicule et l'obstacle et la distance de freinage du véhicule ;
**caractérisé en ce qu'**il comprend également l'étape consistant à :
- générer un signal d'urgence lorsque la situation d'urgence se produit ;
- générer une instruction de freinage d'urgence lorsqu'un élément de commande du conducteur (34) raccordé à un système de freinage du véhicule est actionné ;
- déployer un bouclier (44) depuis une position rétractée vers une position déployée pour au moins partiellement fermer l'espace (22) en réponse au dit signal d'urgence et à ladite instruction de freinage d'urgence.

2. Procédé selon la revendication 1, dans lequel la situation d'urgence se produit si la différence entre la distance entre l'obstacle et le véhicule (10) d'une part, et la distance de freinage du véhicule d'autre part, est inférieure à une valeur prédéterminée.

3. Procédé selon la revendication 1 ou la revendication 2, dans lequel la situation d'urgence se produit si et seulement si l'actionnement de l'élément de commande du conducteur a été détecté, alors que la différence entre la distance entre l'obstacle et le véhicule (10) d'une part, et la distance de freinage du véhicule d'autre part, est inférieure à une valeur prédéterminée.

4. Procédé selon l'une quelconque des revendications précédentes, comprenant en outre une étape consistant à générer un signal d'alarme sur le tableau de bord de commande du conducteur du véhicule lorsque la différence entre la distance entre l'obstacle et le véhicule (10) d'une part, et la distance de freinage du véhicule d'autre part, est inférieure à une valeur prédéterminée.

5. Procédé selon l'une quelconque des revendications précédentes, dans lequel l'étape consistant à déterminer la distance de freinage du véhicule comprend la mesure de la vitesse du véhicule.

6. Procédé selon l'une quelconque des revendications précédentes, dans lequel l'étape consistant à déterminer la distance de freinage du véhicule comprend la détermination de la masse du véhicule.

7. Procédé selon l'une quelconque des revendications précédentes, comprenant en outre une étape consistant à ralentir automatiquement le véhicule (10) lorsque l'actionnement de l'élément de commande du conducteur a été détecté.

8. Procédé selon l'une quelconque des revendications précédentes, comprenant en outre une étape consistant à ralentir automatiquement le véhicule (10) lorsque ladite situation d'urgence se produit.

9. Véhicule sur voie (10) ayant une forme telle qu'un espace (22) est formé entre le véhicule et le sol et comprenant :
- un bouclier (44) qui peut se déplacer d'une position repliée vers une position déployée jusqu'à fermer au moins partiellement l'espace (22) ;
- des moyens permettant de déployer le bouclier d'une position rétractée vers la position déployée en réponse à un signal d'urgence ; et
- un moyen de génération d'un signal d'urgence permettant de générer le signal d'urgence lorsqu'une situation d'urgence se produit,
**caractérisé en ce qu'**il comprend en outre :
- un détecteur de distance permettant de générer un signal de distance représentatif de la distance entre le véhicule (10) et un obstacle sur une voie devant le véhicule ;
- un moyen de détermination de la distance de freinage permettant de générer un signal de distance de freinage, ladite situation d'urgence étant déterminée en se fondant sur au moins le signal de distance et le signal de distance de freinage ;
- un élément de commande du conducteur raccordé à un système de freinage du véhicule, initiant une instruction de freinage d'urgence,
dans lequel la situation d'urgence est déterminée en se fondant sur au moins le signal de distance, le signal de distance de freinage et l'instruction de freinage d'urgence.

10. Véhicule sur voie selon la revendication 9, dans lequel la situation d'urgence se produit si une instruction de freinage d'urgence a été initiée alors que la différence entre la distance entre l'obstacle et le véhicule (10) d'une part, et la distance de freinage du véhicule d'autre part, est inférieure à une valeur prédéterminée.

11. Véhicule sur voie selon la revendication 9, dans lequel la situation d'urgence se produit si et seulement si une instruction de freinage d'urgence a été initiée, alors que la différence entre la distance entre l'obstacle et le véhicule (10) d'une part, et la distance de freinage du véhicule d'autre part, est inférieure à une valeur prédéterminée.

12. Véhicule sur voie selon l'une quelconque des revendications 9 à 11, comprenant en outre un système d'entraînement permettant de déplacer le détecteur de distance (24) de telle manière que le détecteur de distance suive la voie.

13. Véhicule sur voie selon l'une quelconque des revendications 9 à 13, dans lequel le moyen permettant de déployer le bouclier comprend un système d'entraînement (50) permettant de déplacer le bouclier de la position rétractée vers la position déployée.
